(19) Europäisches Patentamt
European Patent Office
Office européen des brevets

(11) **EP 3 265 675 B1**

(12) **EUROPÄISCHE PATENTSCHRIFT**

(45) Veröffentlichungstag und Bekanntmachung des Hinweises auf die Patenterteilung:
**13.04.2022 Patentblatt 2022/15**

(21) Anmeldenummer: **16706379.1**

(22) Anmeldetag: **26.02.2016**

(51) Internationale Patentklassifikation (IPC):
**F03D 7/04** *(2006.01)*

(52) Gemeinsame Patentklassifikation (CPC):
**F03D 7/0276; F03D 7/028; F03D 7/048;**
F03D 7/046; F05B 2270/101; F05B 2270/1014;
F05B 2270/1033; F05B 2270/32; F05B 2270/327;
F05B 2270/335; Y02E 10/72

(86) Internationale Anmeldenummer:
**PCT/EP2016/054092**

(87) Internationale Veröffentlichungsnummer:
**WO 2016/139145 (09.09.2016 Gazette 2016/36)**

(54) **VERFAHREN ZUM BETREIBEN EINER WINDENERGIEANLAGE**

METHOD FOR OPERATING A WIND TURBINE

PROCÉDÉ POUR FAIRE FONCTIONNER UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2015 DE 102015203841**

(43) Veröffentlichungstag der Anmeldung:
**10.01.2018 Patentblatt 2018/02**

(73) Patentinhaber: **Wobben Properties GmbH 26607 Aurich (DE)**

(72) Erfinder:
• **BEEKMANN, Alfred 26639 Wiesmoor (DE)**
• **KRUSE, Marcel 27616 Beverstedt (DE)**

(74) Vertreter: **Eisenführ Speiser Patentanwälte Rechtsanwälte PartGmbB Postfach 10 60 78 28060 Bremen (DE)**

(56) Entgegenhaltungen:
**DE-A1- 19 532 409      DE-A1- 19 844 258
US-A- 4 160 170      US-A1- 2007 216 166
US-A1- 2013 161 950**

**Beschreibung**

Die vorliegende Erfindung betrifft ein Verfahren zum Betreiben einer Windenergieanlage und ein Verfahren zum Betreiben eines Windparks. Außerdem betrifft die vorliegende Erfindung eine Windenergieanlage sowie einen Windpark. Insbesondere betrifft die Erfindung hierbei grundsätzlich Windenergieanlagentypen mit Horizontalachsen, nämlich Windenergieanlagentypen, bei denen sich der Rotor um einen im Wesentlichen waagerecht angeordnete Drehachse dreht, die vorzugsweise zum Betrieb in Richtung zum Wind gedreht wird. Die Drehachse kann eine leichte Neigung zur Horizontalen aufweist, ist aber im Wesentlichen waagerecht angeordnet, so dass ein oder mehrere um sie drehende Rotorblätter einer Rotorblattebene aufspannen, die im Wesentlichen quer zum Wind steht.

Solche Windenergieanlagen sind allgemein bekannt, sie entnehmen Energie aus dem Wind und wandeln sie in elektrische Energie um, was häufig vereinfachend auch als Erzeugen elektrischer Energie bezeichnet wird. Problematisch kann es besonders dann werden, wenn die Windgeschwindigkeit so hoch ist, dass sie die Windenergieanlage gefährden kann. Lange Zeit war es so, dass Windenergieanlagen bei sehr hohen, die Windenergieanlage belastenden Windgeschwindigkeiten abgeschaltet wurden. Jedenfalls eine abrupte Abschaltung bei Nennleistung hat sich als ungünstig erwiesen. Ungünstig ist aber nicht nur, dass dann keine Energie mehr erzeugt werden kann, sondern auch, dass das Wiedereinschalten häufig erst bei deutlich reduzierten Windgeschwindigkeiten vorgenommen wurde. So ergab sich für die erzeugte elektrische Leistung in Abhängigkeit der Windgeschwindigkeit in diesem Bereich der hohen, belastungsgefährdenden Windgeschwindigkeiten, eine Hysterese-Funktion.

Als Abhilfe wurde eine Lehre gemäß dem europäischen Patent 0 847 496 B1 vorgeschlagen. Dort wird beschrieben, bei Erreichen einer Windgeschwindigkeit, bei der bisher abgeschaltet wurde, die Windenergieanlage weiter zu betreiben, wobei Drehzahl und Leistung mit steigender Windgeschwindigkeit reduziert werden. So wird ein Schutz der Windenergieanlagen bei solch hohen Windgeschwindigkeiten gleichwohl erreicht, es kann aber, wenn auch mit reduzierter Leistung, weiter betrieben werden.

Die US 2013/0161950 A1 offenbart ein Verfahren zum Betrieb einer Windenergieanlage. Dieses Verfahren schaltet von der Drehzahlregelung im Normalbetrieb in einen Sicherheitsbetrieb, wenn die Windgeschwindigkeit größer als ein vorgegebener Grenzwert ist. Im Sicherheitsbetrieb wird die Windenergieanlage weiterhin mit einer geringen Drehzahl weiterbetrieben, wobei der Rotor der Windenergieanlage auf eine niedrige Drehzahl abgebremst wird und eine niedrige Leistungsabgabe aufrechterhalten bleibt. Wenn die Windgeschwindigkeit wieder unter den vorgegebenen Grenzwert gefallen ist, kehrt die Windturbine in den Normalbetrieb zurück.

Die US 4,160,170 beschreibt ein Pitch-Steuerungssystem für Windturbinengeneratoren, das automatisch den Pitch-Winkel der Windturbinenblätter verändert, um entweder die elektrische Ausgangsleistung, das Wellendrehmoment oder die Drehzahl zu regeln. Eine schnell wirkende Pitch-Regelung der Rotorblätter der Windenergieanlage reduziert die negativen Auswirkungen von Windböen und Turbulenzen.

Aus der US 2007/0216166 A1 ist ein weiteres Verfahren zum Betreiben einer Windenergieanlage bekannt, bei dem die Rotordrehzahl und die Leistung der Windenergieanlage reduziert werden, wenn eine Grenzwindgeschwindigkeit erreicht oder überschritten wird. Diese Grenzwindgeschwindigkeit ist ein vorbestimmter konstanter Wert.

Diese Lösung hat sich dem Grunde nach bewährt. In der Zwischenzeit sind aber die Windenergieanlagen größer geworden. Insbesondere haben sie nun regelmäßig höhere Achshöhen und größere Rotorblätter. Es ergeben sich also noch größere Angriffsflächen, die bei hohen Windgeschwindigkeiten auch Belastungen standhalten müssen. Zudem ist generell auch bei höherer Höhe mit höheren Windgeschwindigkeiten zu rechnen.

Als weiteres kommt hinzu, dass möglicherweise zukünftig mit mehr Stürmen und damit meist einhergehend mit mehr Böen zu rechnen ist.

Aufgabe der vorliegenden Erfindung ist es somit, die genannten Probleme zu adressieren. Insbesondere soll eine Lösung weiter entwickelt werden, die den Umgang mit hohen Windgeschwindigkeiten berücksichtigt, möglichst eine Verbesserung vorschlägt und dabei möglichst auch die betreffenden Windenergieanlagen zumindest ihrer Größe und/oder Achshöhe nach berücksichtigt. Zumindest soll eine gegenüber bisher bekannten Lösungen alternative Lösung vorgeschlagen werden.

Erfindungsgemäß wird somit ein Verfahren nach Anspruch 1 vorgeschlagen. Dieses Verfahren umfasst die Schritte, dass

- Drehzahl und Leistung der Windenergieanlage reduziert werden wenn die vorherrschende Windgeschwindigkeit einen vorgegebenen ersten Grenzwert überschreitet,

- Drehzahl und Leistung mit weiter ansteigender Windgeschwindigkeit weiter reduziert werden, bis die Drehzahl eine vorbestimmte Mindestdrehzahl erreicht hat und/oder die Leistung eine vorbestimmte Mindestleistung erreicht hat und

- die Windenergieanlage mit noch weiter ansteigender Windgeschwindigkeit die Mindestdrehzahl bzw. die Mindestleistung beibehält, wobei der vorgegebene erste Grenzwert (VWG1) von einer Böigkeit und/oder Böenhäufigkeit des vorherrschenden Windes abhängt.

Drehzahl und Leistung der Windenergieanlage werden also ab einem vorgegebenen ersten Grenzwert reduziert, nämlich von diesem Wert an mit weiter ansteigender Windgeschwindigkeit. Es wird also eine windgeschwindigkeitsabhängige Drehzahl und Leistungsreduktion vorgeschlagen. Die Drehzahl oder die Leistung, insbesondere aber Drehzahl und Leistung werden dabei nicht auf null reduziert, sondern nur bis auf einen Mindestwert reduziert werden. Das wäre für die Drehzahl eine Mindestdrehzahl und für die Leistung eine Mindestleistung. Diese Mindestdrehzahl bzw. Mindestleistung sollen dann bei noch weiter steigender Windgeschwindigkeit beibehalten werden. Dabei kommt es nicht darauf an, dass dieser Wert exakt gehalten wird, sondern dass die Anlage so geführt wird, dass Drehzahl bzw. Leistung eben nicht noch weiter bei weiter steigender Windgeschwindigkeit abgesenkt werden, insbesondere nicht bis auf null abgesenkt werden.

Diesem Vorschlag liegt zunächst einmal die Erkenntnis zugrunde, dass es nachwievor sinnvoll erscheint, Drehzahl und Leistung der Windenergieanlage zu reduzieren, wenn eine die Windenergieanlage gefährdende Windgeschwindigkeit überschritten wird, um dadurch die Anlagenbelastung zu reduzieren oder zu begrenzen. Es wurde aber auch erkannt, dass das Weiterbetreiben der Windenergieanlage mit geringer Drehzahl bzw. Leistung bei auch noch so hohen Windgeschwindigkeiten ohne Beschädigung der Anlage durchgeführt werden kann. Vielmehr hat sich herausgestellt, dass es sogar hilfreich sein kann, wenn sich die Anlage noch etwas dreht.

Zunächst einmal geht diese Lösung von einer Windenergieanlage mit verstellbaren Rotorblättern aus. Diese Rotorblätter werden ab Nennwindgeschwindigkeit, die deutlich geringer ist, als dieser erste Grenzwert, mit stärker werdendem Wind immer weiter aus dem Wind gedreht. Hierbei verringert sich nicht nur die Angriffsfläche des Rotorblatts zum Wind, sondern auch die Kraftrichtung verändert sich - vereinfachend ausgedrückt - von einer Richtung quer zur Blattoberfläche zu einer Richtung parallel zur Blattoberfläche. Das Verstellen der Rotorblätter schafft bereits eine große Entlastung. Bei dem weiteren Verstellen zu dieser niedrigen Leistung bzw. Drehzahl hin schafft bereits ein Verstellen in die Nähe der Fahnenstellung eine starke Reduzierung der Belastung und die Belastung hier ist also bereits sehr gering.

Weiterhin ist es nun vorteilhaft, die Anlage im Betrieb zu behalten, einschließlich auch der Azimutverstellung, also die Ausrichtung der Windenergieanlage zum Wind beizubehalten. Dadurch kann besonders auch gewährleistet werden, dass der Wind weiterhin von vorne kommt und dadurch von der nun wohl belastungsschwächsten Richtung. Dreht sich der Wind, ohne dass die Windenergieanlage nachgeführt wird, kann das dazu führen, dass der Wind plötzlich eine stärkere Angriffsfläche zumindest eines Rotorblatts vorfindet und außerdem auch das Blatt von einer ungünstigeren Richtung anströmt. Um die oben genannte Vereinfachung wieder aufzugreifen, könnte der Wind nun doch wieder wenigstens ein Rotorblatt quer zu Blattoberfläche anströmen.

Eine der erfindungsgemäßen Erkenntnisse ist nun, dass ein Weiterbetreiben der Windenergieanlage auf sehr niedrigem Niveau die einfachste und effizienteste Antwort auf dieses geschilderte Problem ist. Die Anlage wird also mit anderen Worten ganz normal weiterbetrieben, was jedenfalls die Azimutausrichtung der Windenergieanlage anbetrifft. Die Drehzahl bzw. Leistung sind allerdings sehr gering und die Blätter sehr weit aus dem Wind gedreht.

Mit anderen Worten wurde auch erkannt, dass es eine unzutreffende Annahme ist, dass die Windenergieanlage ihren besten Schutz durch Abschalten erfährt. Tatsächlich überlässt man die Windenergieanlage beim Abschalten im Grunde unkontrolliert der Naturgewalt des Windes. Die vorgeschlagene Erfindung weicht davon ab.

Darüber hinaus ist auch nicht zu verachten, dass besonders Lager darunter leiden können, wenn sie zu lange nicht betrieben werden. Eine kurzfristig stehende Windenergieanlage wird wohl keine Schädigung eines Lagers zur Folge habe, wenn sie aber länger steht, könnte hier doch ein Problem entstehen. Besonders das ein, meist die beiden Lager, die den Rotor lagern, müssen sehr hohen Belastungen und Anforderungen genügen. Es kann hier gefährlich sein, diese zu lange stillstehen zu lassen. Natürlich können solche Lager auch durch ungünstige Windbedingungen und einen ungünstigen Betrieb bei starkem Wind Schaden nehmen. Die vorgeschlagene Lösung setzt aber bei sehr hohen Windgeschwindigkeiten einen Betrieb mit geringer Leistung und Drehzahl voraus. Und die oben beschriebene erhebliche Entlastung durch das Verstellen der Rotorblätter fasst in den Wind führt auch zu einer Entlastung dieser Rotorlager. Die Belastung auf das bzw. die Rotorlager ist also gleichwohl bei der erfindungsgemäßen Lösung erheblich reduziert, wobei aber ein Weiterdrehen gewährleistet wird.

Vorzugsweise wird somit auch vorgeschlagen, dass die Windenergieanlage mit noch weiter ansteigender Windgeschwindigkeit die Mindestdrehzahl bzw. die Mindestleistung für jede noch so hohe Windgeschwindigkeit beibehält und nicht abschaltet. Hiermit wird eben erreicht, dass gerade bei sehr hohen Windgeschwindigkeiten, einschließlich Sturm- und Orkanverhältnissen, die Anlage in einer belastungsarmen Situation gehalten werden kann.

Gemäß einer Ausführungsform arbeitet das Verfahren so, dass beim Erreichen der vorbestimmten Mindestdrehzahl bzw. beim Erreichen der vorbestimmten Mindestleistung die Rotorblätter in ihrem Blattwinkel so eingestellt werden, dass die aus dem Wind entnommene Leistung konstant bleibt. Dies bedeutet zunächst einmal, dass die Drehzahl und/oder die Leistung überwacht werden und als Eingangsgröße verwendet werden. Es kann die Drehzahl, oder die Leistung überwacht werden. Beide können zusammen ihren jeweiligen Grenzwert, also Mindestdrehzahl bzw. Mindestleistung erreichen, wenn die Anlage entsprechend geregelt wird. In diesem Fall können beide Größen gleichzeitig berücksichtigt werden. Vorzugsweise wird nur eine von beiden berücksichtigt, um einen etwaigen Konflikt zu vermeiden.

Ist dieser Wert erreicht, wird dann die Anlage so weiter betrieben, dass durch Blattverstellung die aus dem Wind entnommene Leistung konstant bleibt. Dies kann bspw. bei konstant vorgegebenem Drehmoment oder Gegenmoment erfolgen, wenn also bspw. im Falle einer fremderregten Synchronmaschine, die somit als bevorzugte Variante vorgeschlagen wird, die Erregung konstant gehalten wird. In diesen und ähnlichen Fällen kann somit auch bei Sturm die vorgeschlagene Regelung der Windenergieanlage so erfolgen, dass die Leistung überwacht und davon abhängig die Blattwinkel verstellt werden. Es bedarf also keiner Windmessung mehr, die besonders bei solchen hohen Windgeschwindigkeiten, die regelmäßig mit starken Böen einhergehen, schwierig sein können.

Bei der Regelung der Leistung auf einen konstanten Wert kommt es dabei nicht so sehr darauf an, dass dieser exakt und akkurat eingehalten wird, sondern vielmehr, dass er im Wesentlichen und/oder im Mittel konstant ist. Dadurch wird nämlich die Windenergieanlage auf diesem gewünschten niedrigen Wert gehalten und kann gleichzeitig Leistung erzeugen. Die erzeugte Leistung kann und sollte gering sein, aber vorzugsweise so, dass der Betrieb der Windenergieanlage gewährleistet ist. Es sollte also zumindest so viel Leistung erzeugt werden, dass sie ausreicht, Betriebseinrichtungen der Windenergieanlage mit elektrischem Strom zu versorgen, so dass die Windenergieanlage betrieben werden kann. Besonders das Betreiben der Verstelleinrichtung zum Einstellen der Azimutausrichtung ist hier wichtig.

Vorzugsweise ist diese Leistung, nämlich die Mindestleistung, wenigstens doppelt so groß, wie zum Versorgung der Betriebseinrichtung der einen Windenergieanlage nötig ist, so dass mit der darüber hinausgehend erzeugten Leistung eine weitere Windenergieanlage gleicher Größe betrieben werden kann.

Diese letzte Alternative betrifft insbesondere den Betrieb mehrerer Windenergieanlagen in einem Windpark. Hier können bspw. unterschiedlich ausgerüstete Windenergieanlagen vorhanden sein, oder es kann eine gewisse Ausfallsicherheit gewährleistet werden. Es wäre also ein gewisser Leistungspuffer vorhanden, der zwar zum Betreiben einer weiteren, also bspw. Nachbarwindenergieanlagen, verwendet werden kann, der aber auch für die eigene Windenergieanlage verwendet werden kann, in dem bspw. ein Teil in einem elektrischen Energiespeicher zwischengespeichert und bereitgestellt werden kann.

Eine weitere Ausführungsform der Erfindung schlägt vor, dass die Drehzahl und die Leistungen bei einer hohen Böigkeit bzw. Böenhäufigkeit des Windes reduziert werden, bevor die vorherrschende Windgeschwindigkeit den vorgegebenen ersten Grenzwert erreicht hat.

Es wird somit vorgeschlagen, die Böigkeit und außerdem oder alternativ eine Böenhäufigkeit des vorherrschenden Windes mit in das Verfahren einzubeziehen. Eine mögliche Definition einer Böe wäre, wenn der gemessene 1-Minuten-Mittelwert der Windgeschwindigkeit innerhalb weniger Sekunden, bspw. maximal 20 Sekunden und mindestens 3 Sekunden anhaltend, um mindestens 3 m/s überschritten wird. Entsprechend kann aufgrund dieser Definition eine Böe festgestellt werden und damit ist es auch möglich, Böen zu zählen und somit ihre Häufigkeit, also Vorkommen pro Zeitintervall zu bestimmen.

Besonders wird vorgeschlagen, den ersten Grenzwert der vorherrschenden Windgeschwindigkeit zu reduzieren, wenn eine hohe Böenhäufigkeit vorliegt. Als vorherrschende Windgeschwindigkeit kann auch hier, wie auch zu allen übrigen Ausführungsformen der Erfindung, der gemessene 1-Minuten-Mittelwert der Windgeschwindigkeit verwendet werden. Alternativ bzw. zusätzlich kann die Drehzahl und die Leistung bei einer hohen Böigkeit bzw. Böenhäufigkeit des Windes reduziert werden, bevor die vorherrschende Windgeschwindigkeit den vorgegebenen ersten Grenzwert erreicht hat. Dem Grunde nach kann auf beide Arten und Weisen erreicht werden, dass bei einer starken Böigkeit oder großen Böenhäufigkeit eher, also bei geringeren Windgeschwindigkeiten die Drehzahl bzw. Leistung reduziert wird.

Der Hintergrund dieser Überlegung ist, dass durch Böen plötzlich innerhalb weniger Sekunden die Windgeschwindigkeit auf einen Wert ansteigen kann, der zu einer unerwünscht hohen Belastung der Anlage führen kann, weil sich die Anlage darauf nicht schnell genug einstellen kann. Eine unerwünscht hohe Belastung, bspw. durch eine Böe oder generell durch eine etwas höhere Windgeschwindigkeit, bedeutet nicht, dass sofort die Windenergieanlage einen irreparablen Schaden nimmt, oder womöglich ein Rotorblatt bricht. Vielmehr erhöht sich zunächst generell ein Verschleiß oder es stellt sich schneller eine Ermüdungserscheinung ein und mit anderen Worten kann die Lebenszeit verkürzt werden, wenn unerwünscht hohe Belastungen zu häufig, zu lange und/oder zu stark auftreten. Bei einer großen Böenhäufigkeit würde also ohne diese Maßnahme der stärkeren Reduzierung von Drehzahl und/oder Leistung sehr häufig eine Windgeschwindigkeit wirken, die zumindest kurzzeitig eine unerwünscht hohe Belastung der Anlage zur Folge hätte. Durch die entsprechende Häufigkeit könnte sich dies langfristig auf eine Verkürzung der Lebensdauer der Anlage oder einzelner Teile davon auswirken.

Ähnliches gilt, wenn die auftretenden Böen besonders stark sind, sie also den gemessenen 1-Minuten-Mittelwert der Windgeschwindigkeit um deutlich mehr als 5 m/s überschreitet. Dann läge zwar möglicherweise keine starke Böenhäufigkeit vor, dafür aber besonders starke Böen. Die kurzzeitige Überlastung, also Belastung über dem gewünschten Wert, wäre dann zwar nicht sehr häufig, dafür aber umso stärker. Im Ergebnis könnte auch hierdurch langfristig eine Verkürzung der Lebensdauer der Windenergieanlage die Folge sein. Insoweit kann hier der Wert, um den eine durchschnittliche Böe den gemessenen 1-Minuten-Mittelwert der Windgeschwindigkeit überschreitet, als Höhe oder Stärke der Böigkeit zugrundegelegt werden. Wird der Mindestwert von 5 m/s, um den die Windgeschwindigkeit ihren 1-Minuten-Mittelwert überschreitet, als Normierung zugrundegelegt, also auf eins gesetzt, ergäbe sich bei einer mittleren Überschreitung der Windgeschwindigkeit einer Böe um 10 m/s, um ein anschauliches Beispiel zu nennen, eine doppelte so hohe Böigkeit wie bei einem überschreitenden Wert von 5 m/s.

Natürlich können auch beide Werte berücksichtigt werden, nämlich Häufigkeit der Böe und Böigkeit, also Stärke der durchschnittlichen Böe. Liegt also eine hohe Böenhäufigkeit und eine hohe Böigkeit vor, sollte bei noch kleineren Windgeschwindigkeiten die Drehzahl und/oder die Leistung reduziert werden.

Im Übrigen, was für alle Ausführungsformen gelten kann, liegt der erste Grenzwert der Windgeschwindigkeit bei einem Wert der Windgeschwindigkeit, bei der bisher abgeschaltet wurde, nämlich im Sinne des bereits genannten Dokuments EP 0 847 496 B1. Insbesondere wird dieser erste Grenzwert dabei auf einen Wert gelegt, bei dem im Nennbetrieb unerwünscht hohe Belastungen auftreten würden. Vorzugsweise beträgt der erste Grenzwert der Windgeschwindigkeit etwa 23 bis 28 m/s, insbesondere etwa 25 m/s.

Vorzugsweise wird die Windenergieanlage so betrieben, dass Drehzahl und/oder Leistung mit weiter ansteigender Windgeschwindigkeit, also ab dem ersten Grenzwert kontinuierlich mit weiter ansteigender Windgeschwindigkeit reduziert werden, bis die Windgeschwindigkeit einen zweiten Grenzwert erreicht hat. Dieser zweite Grenzwert liegt vorzugsweise deutlich über dem ersten Grenzwert, bspw. wenigstens 8 m/s oder vorzugsweise 15 m/s oberhalb des ersten Grenzwerts. In diesem Bereich, also im Bereich von 25 m/s, entsprechen 4 m/s etwa einer Windstärke im Sinne der Beaufortskala. Der zweite Grenzwert läge dann also wenigstens eine bzw. vorzugsweise wenigstens zwei Windstärken oberhalb des ersten Grenzwerts.

Vorzugsweise beträgt die Mindestdrehzahl maximal 20 %, insbesondere maximal 10 % der Nenndrehzahl. Vorzugsweise beträgt sie wenigstens 5%, insbesondere wenigstens 10 % der Nenndrehzahl. Die Mindestdrehzahl ist somit signifikant kleiner als die Nenndrehzahl, gleichwohl aber deutlich größer, als wäre die Anlage im Stillstand.

Vorzugsweise ist die Mindestleistung maximal 20 % der Nennleistung, vorzugsweise maximal 10 % der Nennleistung der Windenergieanlage. Außerdem wird vorgeschlagen, dass die Mindestleistung auf 0% absinken kann oder wenigstens 2%, insbesondere wenigstens 5 % der Nennleistung beträgt. Damit weist die Mindestleistung einen signifikant kleineren Wert als Nennleistung auf und ist gleichzeitig noch groß genug, um Betriebseinrichtungen der Windenergieanlage zu betreiben.

Weiterhin ist auch erkannt worden, dass ein Sturm nicht nur eine mechanische Belastung für die Windenergieanlage darstellen kann, sondern dass in solchen Situationen auch die Wahrscheinlichkeit für einen Netzausfall höher ist. Ein vorhandenes Netz ist nämlich nicht nur zum Einspeisen elektrischer Energie notwendig, sondern auch um elektrische Energie aus diesem Netz zu entnehmen, um Betriebseinrichtungen einer Windenergieanlage zu versorgen, wenn die Windenergieanlage keinen eigenen Strom erzeugt. Die Erfindung bzw. einige Ausführungsformen von ihr lösen auch dieses Problem, dass nämlich selbst bei einem Netzausfall bei Sturm die Betriebseinrichtungen der Windenergieanlage noch mit Strom versorgt werden können. Insbesondere kann somit auch bei einem Stromausfall bei Sturm die Azimutsteuerung einschließlich der entsprechenden Antriebe betrieben werden und die Windenergieanlage in den Wind gedreht werden. Dadurch können die Lasten minimiert werden.

Vorzugsweise beträgt die Mindestdrehzahl, auf der die Windenergieanlage auch oberhalb der zweiten Grenzwindgeschwindigkeit betrieben wird, einen Wert von etwa 4U/min bis 8U/min, insbesondere 6 U/min. Eine solche Drehzahl kann, besonders bei getriebelosen Windenergieanlagen, ausreichen, um ein Vergammeln der Anlage zu vermeiden, also um besonders Schäden durch unnötige Standzeiten zu vermeiden.

Vorzugsweise kann es hierfür ausreichen, keine Leistung zu erzeugen und nur die Anlage mit geringer Drehzahl zu betreiben. Vorteilhaft ist es, nur so viel Leistung zu erzeugen, dass die Anlage betrieben werden kann, dass also die Betriebseinrichtungen versorgt werden können.

Das Betreiben der Betriebseinrichtungen kann das Betreiben einer Azimutverstellung, das Pitchen, also das Verstellen der Rotorblätter, und auch das Versorgen von Steuerungen betreffen. Ggf. kann dies auch eine Enteisung betreffen, demnach also ausreichend Leistung erzeugt wird, um besonders Heizeinrichtungen zum Enteisen der Rotorblätter zu betreiben.

Erfindungsgemäß wird auch ein Verfahren zum Betreiben mehrerer Windenergieanlagen vorgesehen. Hierbei werden mehrere Windenergieanlagen, insbesondere eines Parks, jeweils so betrieben, wie sich aus wenigstens einer der obigen Ausführungsformen zum Betreiben einer Windenergieanlage ergibt.

Vorzugsweise sind hierbei wenigstens zwei der Windenergieanlage so miteinander gekoppelt, dass die eine Windenergieanlage an die andere Windenergieanlage Leistung überträgt, mit der die andere Windenergieanlage ihre Betriebseinrichtungen betreibt.

Hiermit kann besonders im Sturmfall erreicht werden, dass die Windenergieanlagen in ihrer Drehzahlung und Leistung reduziert werden, bis zu einer Mindestdrehzahl bzw. Mindestleistung und für den Fall, dass dabei eine Windenergieanlage kurzfristig nicht genügend eigene Leistung zum Betreiben ihrer Betriebseinrichtung erzeugt, diese durch eine weitere Windenergieanlage mit dieser notwendigen Leistung versorgt werden kann.

Vorzugsweise kann eine Windenenergieanlage einer anderen Windenergieanlage im Betrieb oberhalb des ersten Grenzwertes der Windgeschwindigkeit noch so viel Leistung bereitstellen, dass diese andere Windenergieanlage ihre Betriebseinrichtungen versorgen kann. Dies ist insbesondere auch vorteilhaft im Betrieb oberhalb eines zweiten Grenzwertes der Windgeschwindigkeit, nämlich beim Betrieb mit Mindestdrehzahl bzw. Mindestleistung. Insbesondere kann so viel Leistung übertragen werden, dass diese andere Windenergieanlage eine Azimutverstellung vornehmen kann. Besonders durch die Azimutverstellung wird gewährleistet, dass die Windenergieanlage in den Wind gedreht werden kann und bei ganz oder fast in Fahnenstellung verdrehten Rotorblättern kann dadurch eine Belastung minimal gehalten werden. Dies wäre dann auch für eine Windenergieanlage möglich, die - aus welchen Gründen auch immer - selbst nicht genügend Leistung für ihre eigene Azimutverstellung bereitstellen kann. Diese Azimutverstellung wäre gleichwohl dann immer noch möglich, wenn eine andere Anlage, insbesondere benachbarte und/oder im selben Windpark angeordnete Anlage zusätzliche Leistung bereitstellen kann.

Vorzugsweise sind hierfür mehrere Windenergieanlagen in einem Windpark angeordnet und werden über eine zentrale Parksteuerung gesteuert, um solche Leistungsverteilungen zwischen Anlagen die überschüssige Leistung erzeugen und Anlagen die nicht ausreichende Leistung erzeugen, zu koordinieren.

Erfindungsgemäß wird zudem eine Windenergieanlage vorgeschlagen, die zumindest gemäß einer der obigen Ausführungsformen betrieben wird, die das Betreiben einer einzelnen Windenergieanlage beschreiben. Vorzugsweise ist eine solche Windenergieanlage getriebelos, so dass ein aerodynamischer Rotor direkt einen elektrodynamischen Rotor des Generators, der auch als Läufer bezeichnet wird antreibt.

Vorzugsweise ist der Generator ein Synchrongenerator und besonders bevorzugt einer mit Fremderregung, also ein Synchrongenerator auf dessen Läufer ein Gleichstrom gesteuert wird und ein Magnetfeld erzeugt und die Stärke des Magnetfeldes über die Höhe des Gleichstroms gesteuert werden kann. Darüber kann dann auch das Drehmoment gesteuert bzw. eingestellt werden. Besonders eine solche Windenergieanlage wird vorteilhafterweise so betrieben, dass sie auch bei sehr hohen Windgeschwindigkeiten, einschließlich Bereiche von Sturm, starkem Sturm oder auch Orkan mit geringer Drehzahl und Leistung weiter betrieben wird. Bei entsprechend geringer Leistung und Drehzahl liegt auch entsprechend ein geringes Drehmoment vor und die Anlage kann somit mit geringer mechanischer Belastung betrieben werden. Dabei wird sie weiterbetrieben, so dass besonders auch präzise führende Lager eines solchen getriebelosen Konzepts zumindest etwas in Bewegung bleiben können. Besonders bei getriebelosen Windenergieanlagen führen häufig dasselbe Lager oder dieselben Lager den aerodynamischen Rotor und den elektrodynamischen Rotor (Läufer) gleichermaßen. Für die Führung des elektrodynamischen Rotors ist dabei eine besondere Genauigkeit erforderlich, um nämlich den entsprechenden Luftspalt zwischen dem elektrodynamischen Rotor (Läufer), und dem Stator des Generators einzuhalten.

Erfindungsgemäß wird zudem ein Windpark vorgeschlagen, der einzelne Windenergieanlagen aufweist, die wie oben gemäß wenigstens einer Ausführungsform beschrieben betrieben werden und vorzugsweise wird hier aber eine Interaktion zwischen wenigstens zwei der Windenergieanlagen eines solchen Parks vorgeschlagen. Dadurch kann auch besonders zuverlässig und mitunter redundant das Betreiben der Windenergieanlagen, insbesondere das Ausrichten jeder der Windenergieanlagen des Windparks in die optimale Azimutstellung erreicht werden.

Nachfolgend wird die Erfindung exemplarisch anhand von Figuren erläutert.

Figur 1    zeigt schematisch eine Windenergieanlage.

Figur 2    zeigt schematisch einen Windpark.

Figur 3    zeigt schematisch ein Diagramm für die Abhängigkeit der Leistung und der Drehzahl von der Windgeschwindigkeit.

Figur 4    veranschaulicht in einem schematischen Diagramm einen Windgeschwindigkeitsverlauf mit Böen, dargestellt über die Zeit.

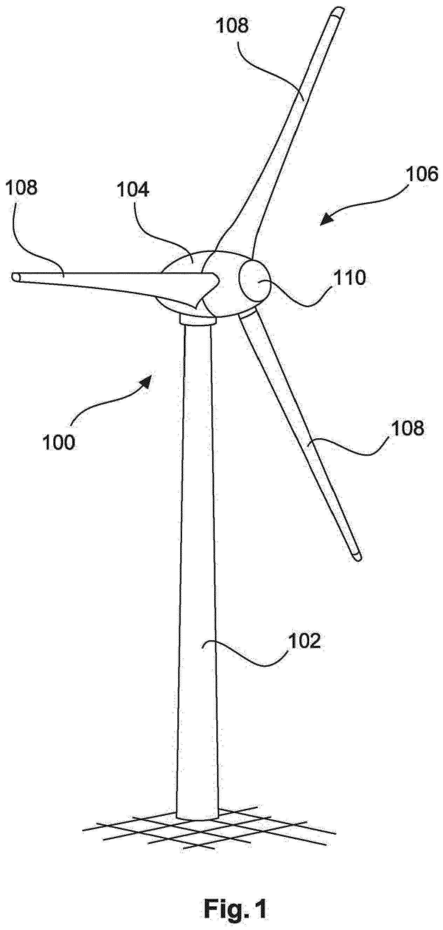

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

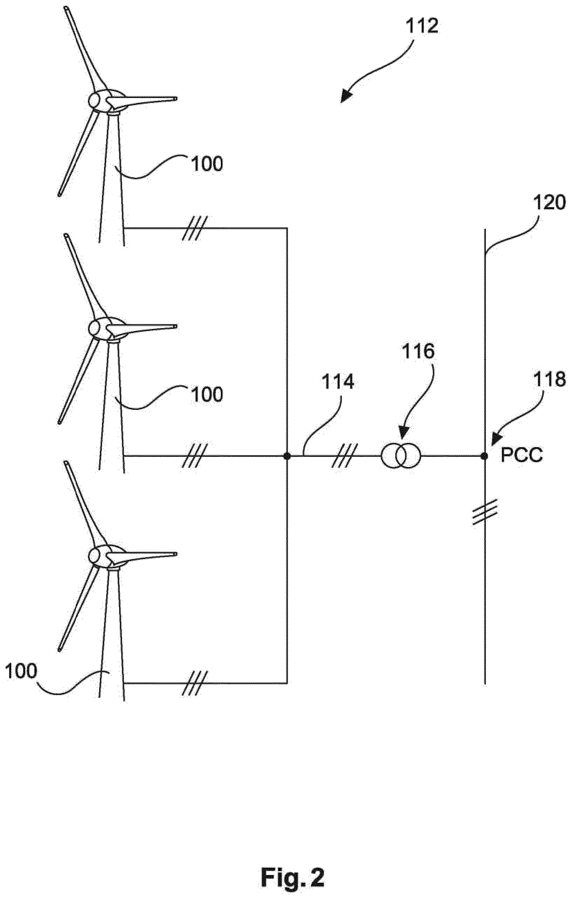

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

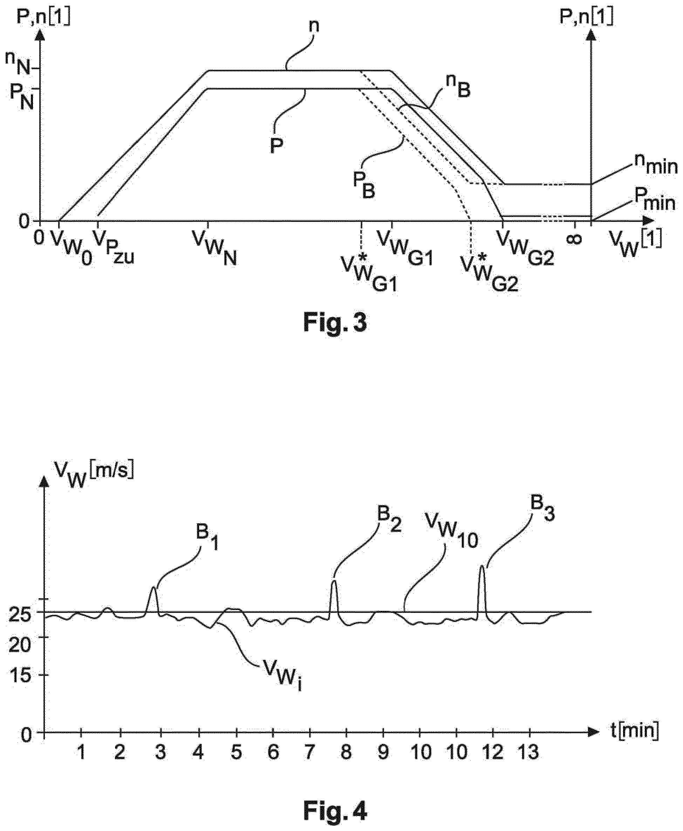

Figur 3 zeigt den Verlauf der Drehzahl n und der Leistung P in Abhängigkeit der Windgeschwindigkeit $V_w$. Demnach steigt die Drehzahl n ab der Anfangswindgeschwindigkeit $V_{w0}$ an. Sie steigt an bis zur Nennwindgeschwindigkeit $V_{wN}$. Die Leistung P beginnt bei der Zuschaltwindgeschwindigkeit $V_{Pzu}$ mit einem kleinen Wert. Bei dieser Windgeschwindigkeit $V_{Pzu}$ wird bspw. die Erregung des Rotors des Generators eingeschaltet, so dass nun erstmals, also bei dieser niedrigen Geschwindigkeit Leistung erzeugt wird. Die Leistung P steigt dann weiter bis zu der Nennwindgeschwindigkeit $V_{wN}$ an. Dieser Bereich von $V_{Pzu}$ bis $V_{wN}$ wird auch Teillastbereich bezeichnet. Der Verlauf der Leistung P und auch der Drehzahl n ist hier vereinfachend linear dargestellt, wird üblicherweise zwar streng monoton steigend sein, nicht aber linear, sondern eher mit einem Kurvenverlauf.

Bei der Nennwindgeschwindigkeit $V_{wN}$ erreichen nun beide Werte ihre Nennwerte, also die Drehzahl n erreicht ihre Nenndrehzahl $n_N$ und die Leistung P erreicht ihre Nennleistung $P_N$. Beides sind übrigens üblicherweise Systemeigenschaften der Windenergieanlagen, auf die diese ausgelegt ist, insbesondere auf die auch der Generator ausgelegt ist. Das gilt insbesondere bei einer getriebelosen Windenergieanlage, bei der die Drehzahl n des aerodynamischen Rotors identisch ist mit der Drehzahl n des elektrodynamischen Rotors bzw. Läufers des Generators.

Mit weiter steigender Windgeschwindigkeit verbleibt die Leistung P und die Drehzahl n auf ihren Nennwerten. Insbesondere wird dafür der Anstellwinkel der Rotorblätter zum Wind verändert. Die Rotorblätter werden nämlich mit zunehmendem Wind aus dem Wind gedreht, also in Richtung einer Fahnenstellung. Dies wird bis zur ersten Grenzwindgeschwindigkeit $V_{WG1}$ so durchgeführt. Dieser erste Grenzwert $V_{WG1}$ liegt besonders bei oder am Ende von Windstärke 9 gemäß der Beaufortskala und damit im Übergang von Sturm zu schwerem Sturm.

Bei dieser ersten Grenzwindgeschwindigkeit wird dann sowohl die Drehzahl n als auch die Leistung P bis zur zweiten Grenzwindgeschwindigkeit $V_{WG2}$ reduziert. Sie erreichen dann dort ihre Mindestwerte, nämlich die Mindestleistung $P_{min}$ bzw. Mindestdrehzahl $n_{min}$.

Die Reduzierung der Leistung P und der Drehzahl n von der ersten Grenzwindgeschwindigkeit $V_{WG1}$ zur zweiten Grenzwindgeschwindigkeit $V_{WG2}$ ist in Figur 2 etwas linear dargestellt. Eine lineare Reduzierung ist eine bevorzugte Ausführungsform aber die Reduzierung kann für die Leistung P und/oder die Drehzahl n auch anderweitig erfolgen, wie bspw. durch eine Parabel oder zusammengesetzte Parabel oder eine Sinusfunktion, wie bspw. ein in den positiven Bereich verschobener Abschnitt einer Sinusfunktion von 90° bis 270°, um nur ein weiteres vorteilhaftes Beispiel zu nennen.

Die erste Grenzwindgeschwindigkeit $V_{WG1}$ und die zweite Grenzwindgeschwindigkeit $V_{WG2}$ werden hier als Synonym verwendet für den ersten Grenzwert der vorherrschenden Windgeschwindigkeit bzw. den zweiten Grenzwert der vorherrschenden Windgeschwindigkeit. Bei der zweiten Grenzwindgeschwindigkeit erreichen die Leistung P und die Drehzahl n dann ihre Mindestwerte $P_{min}$ bzw. $n_{min}$, auf denen diese dann auch bei noch weiter ansteigender Windgeschwindigkeit $V_w$ gehalten werden. Symbolisch ist dort das ∞-Zeichen angezeichnet, um zu veranschaulichen, dass diese beiden Mindestwerte auch bei im Grunde beliebig höheren Windgeschwindigkeiten beibehalten werden. Natürlich erreicht die Windgeschwindigkeit nicht den "Wert" ∞ und dies dient eben nur der Veranschaulichung.

In der schematischen Darstellung der Figur 3 sind sowohl die Leistung P als auch die Drehzahl n jeweils auf ihre Nennwerte normiert. Gemäß der Darstellung beträgt die Mindestdrehzahl $n_{min}$ etwa 25 % der Nenndrehzahl $n_N$ und die Mindestleistung $P_{min}$ etwa 0 % der Nennleistung $P_N$, wird also in dieser Ausführungsform auf null oder fast null reduziert, wobei auch ein höherer Wert in Betracht kommt. Dies sind nur veranschaulichende Werte und 25 % der Nenndrehzahl ist ein recht hoher Wert, der vorzugsweise geringer sein sollte. Realistisch ist aber, dass die Mindestleistung $P_{min}$ gegenüber ihrer Nennleistung $P_n$ stärker reduziert ist, als die Mindestdrehzahl $n_{min}$ gegenüber ihrer Nenndrehzahl $n_N$, weil ansonsten in diesem Bereich sehr hoher Windgeschwindigkeiten, also oberhalb der zweiten Grenzwindgeschwindigkeit immer noch ein maximales Drehmoment vorhanden wäre. Vorzugsweise wird aber das Drehmoment auch reduziert, sodass sich mit Reduzierung der Drehzahl die Leistung entsprechend noch stärker reduziert. Der Grund liegt in dem Zusammenhang zwischen der Leistung P, der Drehzahl n und dem Drehmoment m nach der Formel $P = n \times m$.

Figur 4 veranschaulicht sehr schematisch den Verlauf der Windgeschwindigkeit $V_w$ über die Zeit t. Die stärker variierende Kurve soll die Ist-Windgeschwindigkeit, insbesondere momentane Windgeschwindigkeit oder instantane Windgeschwindigkeit $V_{wi}$ darstellen, wohingegen die sehr gleichmäßige Kurve den 1-Minuten-Mittelwert $V_{w1}$ darstellt. Das schematische Beispiel bildet etwa 13 Minuten ab und die momentane Windgeschwindigkeit $V_{wi}$ weist in dem dargestellten Zeitabschnitt drei Böen $B_1$ bis $B_3$ auf. Somit liegt hier eine Böenhäufigkeit von drei Böen pro 13 Minuten vor, also etwa eine Böe alle vier Minuten. Dies wäre eine vergleichsweise geringe Häufigkeit der Böen.

Die skizzierte Höhe der Böen reicht von etwa 7 m/s bis 15 m/s oberhalb des 1-Minuten-Mittels $V_{w1}$. Die Böenhöhe wäre hierbei im Mittel etwa 10 m/s über dem 1-Minuten-Mittelwert und damit doppelt so hoch wie die Mindesthöhe einer Böe von nämlich 5 m/s oberhalb des 1-Minuten-Mittels. Hier könnte also die Böigkeit mit dem Wert 2 angegeben werden. Diese Böigkeit von 2 wäre ein mittlerer Wert und entspricht im Übrigen etwa einer üblichen Wettersituation, bei der eine Böe um etwa zwei Windstärken über der mittleren Windgeschwindigkeit liegt.

Gemäß einer Ausführungsform wird vorgeschlagen, dass die erste Grenzwindgeschwindigkeit $V_{wG1}$ abhängig von der Böenhäufigkeit und/oder der Böigkeit oder Stärke der Böen reduziert wird. Dies ist in der Figur 3 mit dem gestrichelten Zweig der Drehzahl $n_B$ veranschaulicht und für die Leistung P mit dem gestrichelten Zweig $P_B$. Dort ist also eine böenabhängige Verschiebung skizziert. Die Grenzwindgeschwindigkeiten $V_{wG1}$ und auch $V_{wG2}$ sind in der Darstellung nicht verändert worden, aber im Ergebnis sind die Windgeschwindigkeitswerte, bei denen die Leistung P bzw. $P_B$ einerseits und die Drehzahl n bzw. $n_B$ andererseits reduziert werden, zu geringeren Windgeschwindigkeitswerten hin verschoben worden. Diese veränderten Werte sind als $V_{wG1}^*$ bzw. $V_{wG2}^*$ an der Abszisse gekennzeichnet.

Betrachtet man die beiden Figuren 3 und 4 zusammen, würde hierbei die Böenhäufigkeit, die recht gering ist, nicht oder nur in geringem Maße zu der angedeuteten Verschiebung der böenabhängigen Leistung $P_B$ und der böenabhängigen Drehzahl $n_B$ führen. Die Böigkeit oder Stärke der Böen gemäß Figur 4 hat etwa mittlere Wert und würde daher gemäß der entsprechenden Ausführungsform zu einer Verschiebung der Leistung $P_B$ bzw. Drehzahl $n_B$ führen.

**Patentansprüche**

1. Verfahren zum Betreiben einer Windenergieanlage (100), wobei

     - Drehzahl (n) und Leistung (P) der Windenergieanlage (100) reduziert werden, wenn die vorherrschende Windgeschwindigkeit (Vw) einen vorgegebenen ersten Grenzwert ($V_{WG1}$) überschreitet,
     - Drehzahl (n) und Leistung (P) mit weiter ansteigender Windgeschwindigkeit (Vw) weiter reduziert werden, bis die Drehzahl (n) eine vorbestimmte Mindestdrehzahl ($n_{min}$) erreicht und/oder die Leistung (P) eine vorbestimmte Mindestleistung ($P_{min}$) erreicht
     - die Windenergieanlage (100) mit noch weiter ansteigender Windgeschwindigkeit (Vw) die Mindestdrehzahl ($n_{min}$) bzw. die Mindestleistung ($P_{min}$) beibehält,

     **dadurch gekennzeichnet, dass**
     der vorgegebene erste Grenzwert ($V_{WG1}$) von einer Böigkeit und/oder Böenhäufigkeit des vorherrschenden Windes abhängt.

2. Verfahren nach Anspruch 1,
   **dadurch gekennzeichnet, dass**
   die Windenergieanlage (100) mit noch weiter ansteigender Windgeschwindigkeit (Vw) die Mindestdrehzahl ($n_{min}$) bzw. die Mindestleistung ($P_{min}$) für jede noch so hohe Windgeschwindigkeit (Vw) beibehält und nicht abschaltet.

3. Verfahren Anspruch 1 oder 2,
   **dadurch gekennzeichnet, dass**
   beim Erreichen der vorbestimmten Mindestdrehzahl ($n_{min}$) bzw. beim Erreichen der vorbestimmten Mindestleistung ($P_{min}$) die Rotorblätter in ihrem Blattwinkel so eingestellt werden, dass die aus dem Wind entnommene Leistung (P) konstant bleibt.

4. Verfahren nach einem der vorstehenden Ansprüche,
   **dadurch gekennzeichnet, dass**
   die Drehzahl (n) und die Leistung (P) bei einer hohen Böigkeit bzw. Böenhäufigkeit des Windes reduziert werden, bevor die vorherrschende Windgeschwindigkeit (Vw) den vorgegebenen ersten Grenzwert ($V_{WG1}$) erreicht hat.

5. Verfahren nach einem der vorstehenden Ansprüche,
   **dadurch gekennzeichnet, dass**
   die Mindestleistung ($P_{min}$) wenigstens so groß ist, dass sie ausreicht, Betriebseinrichtungen der Windenergieanlage (100) mit elektrischem Strom zu versorgen, so dass die Windenergieanlage (100) betrieben werden kann.

6. Verfahren nach Anspruch 5, **dadurch gekennzeichnet, dass** die Mindestleistung ($P_{min}$) wenigstens doppelt so groß ist wie zum Versorgen ihrer Betriebseinrichtungen nötig ist, so dass damit die Windenergieanlage (100) und wenigstens eine weitere Windenergieanlage (100) gleicher Größe betrieben werden kann.

7. Verfahren zum Betreiben wenigstens zweier, insbesondere in einem Windpark (112) gruppierter Windenergieanlagen (100), wobei jede Windenergieanlage (100) gemäß einem Verfahren nach einem der vorstehenden Ansprüche betrieben wird.

8. Verfahren nach Anspruch 7,
   **dadurch gekennzeichnet, dass**
   wenigstens eine der Windenergieanlagen (100) bei Windgeschwindigkeiten (Vw) oberhalb des ersten Grenzwerts ($V_{WG1}$) so viel Leistung (P) erzeugen, dass sie noch Leistung (P) an eine weitere der Windenergieanlagen (100) übertragen kann, damit diese weitere Windenergieanlage (100) mit dieser übertragenden Leistung (100) ihre Betriebseinrichtungen betreiben kann.

**9.** Windenergieanlage (100) dazu vorbereitet mit einem Verfahren gemäß einem der Ansprüche 1 bis 6 betrieben zu werden.

**10.** Windenergieanlage (100) nach Anspruch 9, **dadurch gekennzeichnet, dass** die Windenergieanlage (100) getriebelos ist, einen Synchrongenerator aufweist, als Horizontalachsenwindenergieanlagen ausgebildet ist und/oder in ihrem Anstellwinkel verstellbare Rotorblätter (108) aufweist.

**11.** Windenergieanlage (100) nach Anspruch 10, **dadurch gekennzeichnet, dass** der Synchrongenerator ein Synchrongenerator mit Fremderregung ist.

**12.** Windpark (112) mit wenigstens zwei Windenergieanlagen (100) gemäß Anspruch 9 und/oder dazu vorbereitet mit einem Verfahren gemäß einem der Ansprüche 7 und 8 betrieben zu werden.

**13.** Windpark nach Anspruch 12, **dadurch gekennzeichnet, dass**

- bei Sturm von jeder funktionsfähigen Windenergieanlage (100) so viel Leistung erzeugt wird, dass jeweils eine weitere Windenergieanlage (100) damit mit betrieben werden kann.

**Claims**

**1.** Method for operating a wind energy converter (100), wherein

- the rotational speed (n) and power (P) of the wind energy converter (100) are reduced when the prevailing wind speed (Vw) exceeds a predetermined first limit value ($V_{WG1}$),
- the rotational speed (n) and power (P) are reduced further with an increasing wind speed (Vw) until the rotational speed (n) reaches a predetermined minimum rotational speed ($n_{min}$) and/or the power (P) reaches a predetermined minimum power ($P_{min}$),
- the wind energy converter (100) maintains the minimum rotational speed ($n_{min}$), or the minimum power ($P_{min}$), if the wind speed (Vw) increases even further,

**characterized in that** the predetermined first limit value ($V_{WG1}$) depends on a gustiness and/or a gust frequency of the prevailing wind.

**2.** Method according to Claim 1, **characterized in that**

if the wind speed (Vw) increases even further, the wind energy converter (100) maintains the minimum rotational speed ($n_{min}$), or the minimum power ($P_{min}$), for any wind speed (Vw) which is still as high, and is not switched off.

**3.** Method according to Claim 1 or 2, **characterized in that** when the predetermined minimum rotational speed is reached ($n_{min}$), or when the predetermined minimum power ($P_{min}$) is reached, the rotor blades have their blade angle adjusted so that the power (P) taken from the wind remains constant.

**4.** Method according to one of the preceding claims, **characterized in that** the rotational speed (n) and the power (P) are reduced in the event of a high gustiness or gust frequency of the wind before the prevailing wind speed (Vw) has reached the predetermined first limit value ($V_{WG1}$).

**5.** Method according to one of the preceding claims, **characterized in that** the minimum power ($P_{min}$) is at least high enough to be sufficient to supply operating devices of the wind energy converter (100) with electric current, so that the wind energy converter (100) can be operated.

**6.** Method according to claim 5, **characterized in that** the minimum power ($P_{min}$) is at least twice as great as is necessary in order to supply its operating devices, so that the wind energy converter (100) and at least one further wind energy converter (100) of the same size can therefore be operated.

**7.** Method for operating at least two wind energy converters (100), in particular grouped in a wind park (112), wherein each wind energy converter (100) is operated by a method according to one of the preceding claims.

**8.** Method according to Claim 7, **characterized in that** in the event of wind speeds (Vw) above the first limit value ($V_{WG1}$), at least one of the wind energy converters (100) generates so much power (P) that it can still transmit power (P) to another of the wind energy converters (100), so that this further wind energy converter (100) can operate its operating devices with this transmitted power (100).

**9.** Wind energy converter (100) prepared in order to be operated by a method according to one of Claims 1 to 6.

**10.** Wind energy converter (100) according to Claim 9, **characterized in that**

the wind energy converter (100) is gearless, has a synchronous generator, is configured as horizontal-axis wind energy converter, and/or has rotor blades (108) whose attitude angle can be adjusted.

11. Wind energy converter (100) according to Claim 10, **characterized in that** the synchronous generator is a synchronous generator with external excitation.

12. Wind park (112) having at least two wind energy converters (100) according to Claim 9 and/or prepared in order to be operated by a method according to one of Claims 7 and 8.

13. Wind park according to Claim 12, **characterized in that**

- in the event of a gale, each functional wind energy converter (100) generates so much power that a further wind energy converter (100) can respectively be operated therewith.

**Revendications**

1. Procédé de fonctionnement d'une éolienne (100), dans lequel

- la vitesse de rotation (n) et la puissance (P) de l'éolienne (100) sont réduites lorsque la vitesse du vent ($V_w$) prédominant dépasse une première valeur limite prédéfinie ($V_{WG1}$),
- la vitesse de rotation (n) et la puissance (P) sont encore réduites avec une vitesse du vent encore croissante ($V_w$) jusqu'à ce que la vitesse de rotation (n) atteigne une vitesse de rotation minimale prédéfinie ($n_{min}$) et/ou la puissance (P) atteigne une puissance minimale prédéfinie ($P_{min}$),
- l'éolienne (100) conserve avec une vitesse du vent ($V_w$) encore plus croissante la vitesse de rotation minimale ($n_{min}$) ou la puissance minimale ($P_{min}$),

**caractérisé en ce que** la première valeur limite prédéfinie ($V_{WG1}$) dépend d'une rafale et/ou d'une fréquence de rafales du vent prédominant.

2. Procédé selon la revendication 1, **caractérisé en ce que** l'éolienne (100) conserve avec une vitesse du vent ($V_w$) encore plus croissante la vitesse de rotation minimale ($n_{min}$) ou la puissance minimale ($P_{min}$) pour chaque vitesse du vent ($V_w$) encore si élevée et ne s'arrête pas.

3. Procédé selon la revendication 1 ou 2, **caractérisé en ce que** lors de l'atteinte de la vitesse de rotation minimale prédéfinie ($n_{min}$) ou lors de l'atteinte de la puissance minimale prédéfinie ($P_{min}$) les pales de rotor sont réglées dans leurs angles de pale de sorte que la puissance (P) retirée du vent reste constante.

4. Procédé selon l'une des revendications précédentes, **caractérisé en ce que** la vitesse de rotation (n) et la puissance (P) sont réduites en cas de rafale ou de fréquence de rafales élevée du vent avant que la vitesse du vent ($V_w$) prédominante n'ait atteint la première valeur limite prédéfinie ($V_{WG1}$).

5. Procédé selon l'une des revendications précédentes, **caractérisé en ce que** la puissance minimale ($P_{min}$) est au moins aussi grande qu'elle suffit pour alimenter des dispositifs de fonctionnement de l'éolienne (100) en courant électrique de sorte que l'éolienne (100) puisse fonctionner.

6. Procédé selon la revendication 5, **caractérisé en ce que** la puissance minimale ($P_{min}$) est au moins deux fois plus grande qu'elle n'est nécessaire pour l'alimentation de ses dispositifs de fonctionnement de sorte qu'ainsi l'éolienne (100) et au moins une autre éolienne (100) de même grandeur puissent fonctionner.

7. Procédé de fonctionnement d'au moins deux éoliennes (100) groupées en particulier dans un parc éolien (112), dans lequel chaque éolienne (100) fonctionne selon un procédé selon l'une quelconque des revendications précédentes.

8. Procédé selon la revendication 7, **caractérisé en ce que** au moins une des éoliennes (100) génère en cas de vitesses du vent ($V_w$) supérieures à la première valeur limite ($V_{WG1}$) autant de puissance (P) qu'elle puisse encore transmettre de la puissance (P) à une autre des éoliennes (100), afin que cette autre éolienne (100) puisse faire fonctionner avec cette puissance de transmission (100) ses dispositifs de fonctionnement.

9. Eolienne (100) préparée afin de fonctionner avec un procédé selon l'une quelconque des revendications 1 à 6.

10. Eolienne (100) selon la revendication 9, **caractérisée en ce que** l'éolienne (100) est sans engrenage, présente un générateur synchrone, est réalisée comme éoliennes à axe horizontal et/ou présente des pales de rotor (108) réglables dans leur angle d'attaque.

11. Eolienne (100) selon la revendication 10, **caractérisée en ce que** le générateur synchrone est un générateur synchrone avec une excitation externe.

12. Parc éolien (112) avec au moins deux éoliennes (100) selon la revendication 9 et/ou préparé afin de fonctionner avec un procédé selon l'une quelconque des revendications 7 et 8.

13. Parc éolien selon la revendication 12, **caractérisé en ce que**

    - en cas de tempête autant de puissance est générée par chaque éolienne fonctionnelle (100) pour que respectivement une autre éolienne (100) puisse fonctionner ainsi.

**Fig. 1**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0847496 B1
- US 20130161950 A1
- US 4160170 A
- US 20070216166 A1